# FASCICULE DE BREVET EUROPEEN

(11) **EP 4 455 022 B1**
(45) Date de publication et mention de la délivrance du brevet: **18.06.2025**
(21) Numéro de dépôt: 24165993.7
(22) Date de dépôt: 25.03.2024
(51) Int. Cl.: B64D 37/32, B64D 37/30

(54) **AÉRONEF COMPORTANT UNE CANALISATION DE TRANSPORT DE DIHYDROGÈNE ET UN SYSTÈME D'EXTRACTION DUDIT DIHYDROGÈNE VERS L'EXTÉRIEUR**
FLUGZEUG MIT EINER ROHRLEITUNG ZUM TRANSPORT VON DIWASSERSTOFF UND EINEM SYSTEM ZUR EXTRAKTION VON DIESEM WASSERSTOFF NACH AUSSEN
AIRCRAFT COMPRISING A PIPE FOR TRANSPORTING DIHYDROGEN AND A SYSTEM FOR EXTRACTING SAID DIHYDROGEN TOWARDS THE OUTSIDE

(30) Priorité: 26.04.2023 FR 2304190
(43) Date de publication de la demande: 30.10.2024
(73) Titulaire: AIRBUS OPERATIONS (S.A.S.), 31060 Toulouse (FR)
(72) Inventeur: MILLIERE, Jérôme, 31060 TOULOUSE (FR)
(74) Mandataire: Airbus-OPS SAS

(56) Documents cités:
- US-A1- 2023 043 843
- US-A1- 2023 044 493
- US-A1- 2023 086 167

## Description

### DOMAINE TECHNIQUE

La présente invention se rapporte au domaine des aéronefs et, en particulier, des aéronefs dont la source d'énergie est du dihydrogène liquide ou gazeux que ce soit pour alimenter une pile à combustible ou directement la chambre de combustion d'un moteur. La présente invention concerne ainsi un aéronef comportant une canalisation de transport de dihydrogène et un système d'extraction dudit dihydrogène vers l'extérieur en cas de besoin.

### ÉTAT DE LA TECHNIQUE ANTÉRIEURE

Il est connu d'utiliser le dihydrogène comme source d'énergie dans un aéronef. Le dihydrogène est stocké dans un réservoir et une canalisation de transport assure le transport du dihydrogène du réservoir vers le dispositif consommateur, comme par exemple une pile à combustible ou la chambre de combustion d'un moteur.

En cas de fuite de dihydrogène le long de cette canalisation de transport, et pour éviter la création d'un mélange inflammable autour de la zone de fuite, il est nécessaire de prévoir des dispositifs dédiés.

Les documents US2024/043843, US2023/044493 et US2023/086167 divulguent des dispositifs de l'art antérieur.

### EXPOSÉ DE L'INVENTION

Un objet de la présente invention est de proposer un aéronef comportant une canalisation de transport de dihydrogène et un système d'extraction qui assure l'évacuation du dihydrogène vers l'extérieur de l'aéronef en cas de fuite.

À cet effet, est proposé un aéronef comportant :
- au moins une canalisation de transport dans laquelle s'écoule du dihydrogène,
- pour chaque canalisation de transport, une sur-canalisation dans laquelle est fixée la canalisation de transport,
- un réservoir contenant du dihydrogène,
- une chambre comportant par des parois latérales, un plancher et un plafond délimitant ensemble un volume étanche et destinée à contenir des systèmes pour le transport du dihydrogène, où ladite au moins une canalisation de transport est fluidiquement connectée à un desdits systèmes, où la ladite au moins une canalisation de transport rejoint la sur-canalisation correspondante à travers une cheminée du plafond,
- une chambre d'extraction dans laquelle débouchent la cheminée et la ou chaque sur-canalisation, et
- des moyens d'extraction arrangés pour extraire les gaz présents dans ladite chambre d'extraction vers l'extérieur.

Avec un tel arrangement, en cas de fuite de dihydrogène dans la chambre, le dihydrogène est évacué vers l'extérieur de l'aéronef.

Avantageusement, l'une des parois latérales présente un passage dans lequel une extrémité du réservoir est fixée de manière étanche.

Avantageusement, la cheminée débouche dans la chambre d'extraction par le dessous de ladite chambre d'extraction.

Avantageusement, l'aéronef comporte un système d'aération arrangé pour assurer l'introduction d'air extérieur dans la ou chaque sur-canalisation vers la chambre d'extraction. Avantageusement, la ou chaque sur-canalisation débouche dans la chambre d'extraction par l'avant de ladite chambre d'extraction.

Avantageusement, les moyens d'extraction comportent un système à effet venturi.

Avantageusement, les moyens d'extraction comportent une canalisation d'évacuation qui débouche à l'extérieur de l'aéronef et qui est fluidiquement connectée à la chambre d'extraction et un ventilateur monté dans la canalisation d'évacuation.

Avantageusement, la canalisation d'évacuation débouche dans la chambre d'extraction par l'arrière de ladite chambre d'extraction.

Avantageusement, la chambre d'extraction comporte une paroi externe constituant une paroi extérieure de l'aéronef, ladite paroi externe est percée d'une ouverture, et ladite paroi externe est équipée d'une trappe mobile alternativement entre une position fermée dans laquelle l'ouverture est fermée et une position ouverte dans laquelle l'ouverture est ouverte.

Avantageusement, l'aéronef comporte un canal d'entrée d'air disposé en partie basse de la chambre et communicant entre l'extérieur de l'aéronef et l'intérieur de la chambre.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de dessus d'un aéronef selon l'invention,
[Fig. 2] est une vue en coupe du fuselage de l'aéronef de la Fig. 1 selon la ligne II-II,
[Fig. 3] est une vue en perspective de la partie de l'aéronef comportant un réservoir de dihydrogène,
[Fig. 4] montre la même vue que celle de la Fig. 3 sans le réservoir de dihydrogène,
[Fig. 5] est une vue en coupe par un plan vertical de la partie de l'aéronef comportant le réservoir de dihydrogène, et
[Fig. 6] est un agrandissement du détail VI de la Fig. 5.

### EXPOSÉ DÉTAILLÉ DE MODES DE RÉALISATION

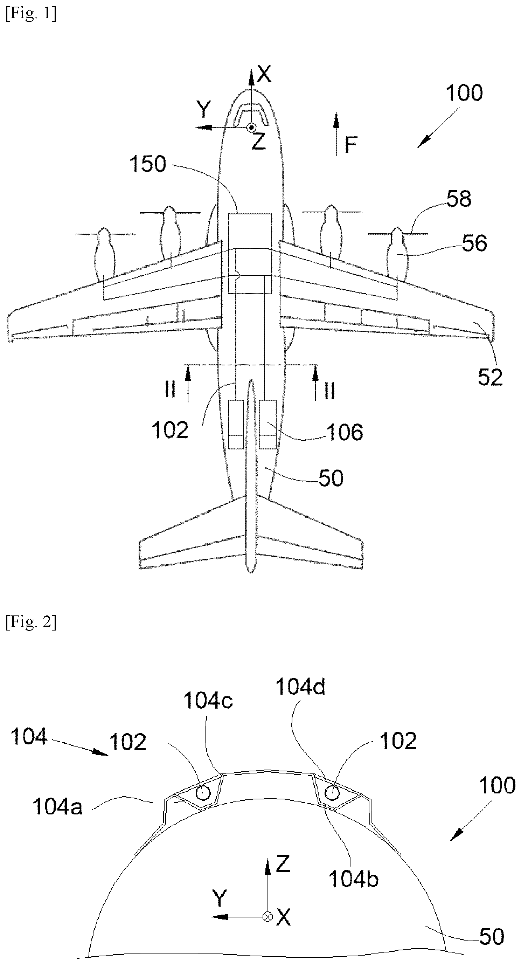

La Fig. 1 montre un aéronef 100 qui présente un fuselage 50 de part et d'autre duquel est fixée une aile 52. Sous chaque aile 52 est fixé au moins un système de propulsion 56.

Par convention, on appelle X la direction longitudinale de l'aéronef 100, Y la direction transversale de l'aéronef 100 qui est horizontale lorsque l'aéronef est au sol, et Z la direction verticale ou hauteur verticale lorsque l'aéronef est au sol, ces trois directions X, Y et Z étant orthogonales entre elles.

D'autre part, les termes " avant " et " arrière " sont à considérer par rapport à une direction d'avancement de l'aéronef 100 lors du fonctionnement des systèmes de propulsion 56, cette direction étant représentée schématiquement par la flèche F.

Dans le mode de réalisation de l'invention présenté ici, chaque système de propulsion 56 comprend un moteur électrique, une hélice 58 montée sur l'arbre moteur dudit moteur électrique et une pile à combustible qui alimente le moteur en électricité.

La pile à combustible est alimentée en oxygène et en dihydrogène afin de produire de l'électricité.

Dans un autre mode de réalisation, le système de propulsion 56 peut prendre la forme d'un turboréacteur dont le carburant qui est brûlé dans la chambre de combustion est du dihydrogène.

L'aéronef 100 comporte également au moins un réservoir 106 qui est rempli de dihydrogène et il y a ici deux réservoirs 106 disposés respectivement à bâbord et à tribord du fuselage 50.

Les réservoirs 106 sont disposés ici dans une partie arrière du fuselage 50, mais ils pourraient être disposés dans une autre partie de l'aéronef 100. Le dihydrogène peut être liquide ou gazeux.

Pour transporter le dihydrogène, l'aéronef 100 comporte au moins une canalisation de transport 102 dans laquelle s'écoule le dihydrogène d'un réservoir 106 vers le système de propulsion 56 pour alimenter une pile à combustible ou une chambre de combustion qui constitue un dispositif consommateur dudit dihydrogène. Pour des raisons de facilité de mise en œuvre, les canalisations de transport 102 sont préférentiellement disposées en partie haute de l'aéronef 100 et s'étendent ainsi le long du fuselage 50 et des ailes 52 en partie haute de ceux-ci.

La Fig. 2 montre une coupe du fuselage 50 avec deux canalisations de transport 102.

Dans le mode de réalisation représenté sur la Fig. 2, chaque canalisation de transport 102 est logée et fixée dans une sur-canalisation 104 qui entoure donc ladite canalisation de transport 102. Dans le mode de réalisation de l'invention présenté à la Fig. 2, la sur-canalisation 104 prend la forme d'un caniveau 104a avec un fond 104b, une ouverture 104c à l'opposé du fond 104b, et un couvercle 104d qui recouvre l'ouverture 104c du caniveau 104a en l'obturant. La canalisation de transport 102 est fixée à la sur-canalisation 104 par tous moyens appropriés comme par exemple des colliers.

Dans le mode de réalisation de l'invention présenté à la Fig. 2, le caniveau 104a présente une section trapézoïdale, mais des sections de forme différente sont possibles.

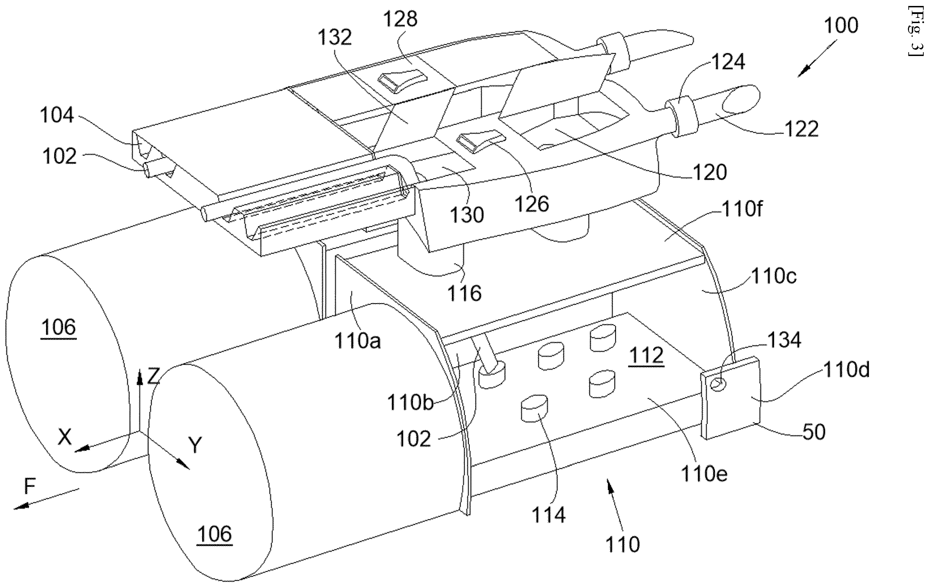

Les Figs. 3 à 5 montrent la partie de l'aéronef 100 où sont disposés les réservoirs 106. Sur la Fig. 3, une partie du couvercle 104d a été retirée pour montrer la canalisation de transport 102 dans la sur-canalisation 104.

L'aéronef 100 comporte ainsi, pour chaque réservoir 106, une chambre 110 comportant par des parois latérales 110a-d, ici au nombre de quatre et où chacune s'étend globalement verticalement, un plancher 110e et un plafond 110f. Les parois latérales 110a-d, le plancher 110e et le plafond 110f délimitent ensemble un volume 112 étanche. La jonction entre les parois latérales 110a-d, le plancher 110e et le plafond 110f sont étanches pour éviter que du dihydrogène provenant d'une fuite dans la chambre 110 se diffuse à travers l'aéronef 100. Dans la chambre 110, des systèmes 114 sont agencés et ces systèmes 114 sont prévus pour assurer le transport du dihydrogène du réservoir 106 vers la canalisation de transport 102. Ces systèmes 114 sont par exemple des tuyauteries de distribution vers des pompes, des réchauffeurs, etc qui assurent le traitement du dihydrogène et qui sont par exemple disposés dans un compartiment dédié voisin.

Chaque canalisation de transport 102 est fluidiquement connectée à un des systèmes 114, comme par exemple une tuyauterie de distribution fluidiquement connectée à une pompe et pour ce faire, le plafond 110f est équipé d'une cheminée 116 à travers laquelle la canalisation de transport 102 rejoint la sur-canalisation 104.

Le nombre de cheminées 116 peut varier par exemple en fonction du nombre de canalisations à faire passer. Dans le mode de réalisation de l'invention présenté ici, il y a deux cheminées 116.

Au-dessus du plafond 110f et de chaque cheminée 116, l'aéronef 100 comporte une chambre d'extraction 120 délimitée par des parois. La cheminée 116 et chaque sur-canalisation 104 correspondant à une canalisation de transport 102 traversant la cheminée 116 débouchent dans la chambre d'extraction 120, à travers ici des orifices dans les parois de ladite chambre d'extraction 120.

Ainsi, dans le mode de réalisation de l'invention présenté aux Figs. 3 à 5, la ou chaque cheminée 116 débouche dans la chambre d'extraction 120 par le dessous de ladite chambre d'extraction 120.

Chaque canalisation de transport 102 traverse ainsi la chambre 110 et la chambre d'extraction 120.

Chaque cheminée 116 est étanche dans le sens où elle ne laisse pas le gaz s'échapper vers l'intérieur de l'aéronef 100, mais elle n'est pas étanche dans le sens où elle guide le gaz entre la chambre 110 et la chambre d'extraction 120.

L'aéronef 100 comporte également des moyens d'extraction qui sont arrangés pour extraire les gaz (air, dihydrogène) présents dans la chambre d'extraction 120 vers l'extérieur de l'aéronef 100 afin de limiter la concentration de dihydrogène.

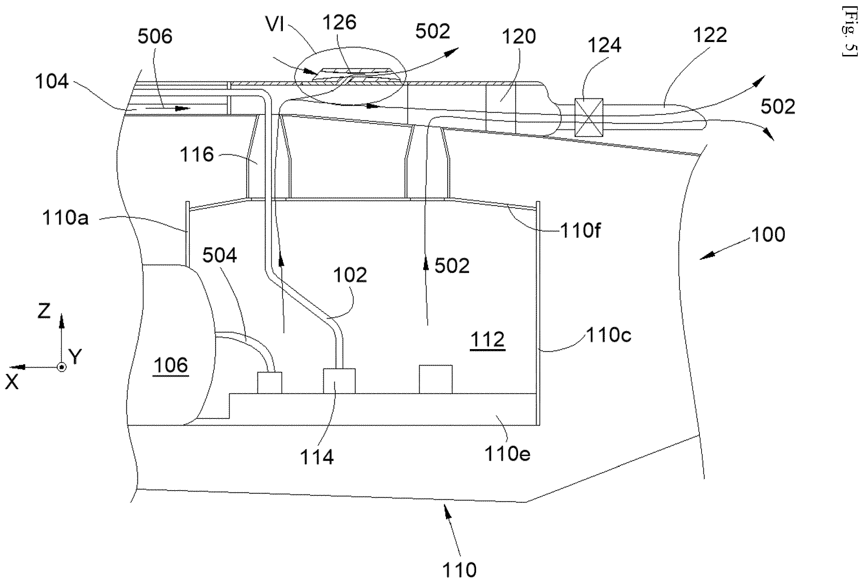

Ainsi, comme le montre la Fig. 5, en cas de présence de dihydrogène dans la chambre 110 par exemple du fait d'une fuite d'une canalisation présente dans la chambre 110 ou d'un système 114, le système d'extraction aspire les gaz présents dans la chambre d'extraction 120 et par voie de conséquence dans la chambre 110 par aspiration à travers les cheminées 116 pour les rejeter à l'extérieur de l'aéronef 100. À cette fin, les flèches 502 montrent le parcours des gaz de la chambre 110 vers l'extérieur.

Dans le mode de réalisation de l'invention présenté à la Fig. 3, l'une des parois latérales 110d est constituée de la peau du fuselage 50.

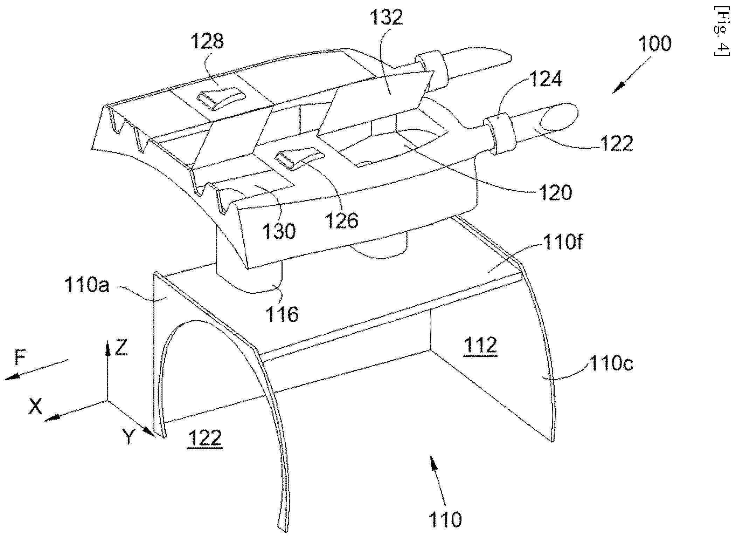

Comme le montrent les Figs. 4 et 5, l'une des parois de la chambre 110, ici la paroi latérale 110a qui est vers l'avant de l'aéronef 100 présente un passage 121 dans lequel une extrémité du réservoir 106 est fixée de manière étanche. Un tel arrangement permet de placer la canalisation 504 qui va du réservoir 106 vers un système 114 dans la chambre 110. La canalisation 504 est fluidiquement connectée à la canalisation de transport 102 à travers les systèmes 114 et en constitue donc une partie.

Dans le mode de réalisation de l'invention présenté à la Fig. 1, l'aéronef 100 comporte un système d'aération 150 qui est disposé ici au niveau de la partie supérieure de l'aéronef 100 au niveau de la jonction des ailes 52 et qui permet l'introduction d'air extérieur et l'envoi de cet air dans chaque sur-canalisation 104 vers la chambre d'extraction 120. Ainsi, lorsque l'aéronef 100 avance, l'air extérieur s'engouffre dans chaque sur-canalisation 104 pour rejoindre l'arrière de la sur-canalisation 104 qui est ici la partie qui débouche dans la chambre d'extraction 120. Ainsi, le dihydrogène éventuellement présent dans la sur-canalisation 104 est repoussé vers la chambre d'extraction 120 (flèche 156) où il est évacué vers l'extérieur de l'aéronef 100 par les moyens d'extraction.

Le système d'aération 150 prend par exemple la forme d'une bouche d'aération arrangée pour capter de l'air extérieur à l'aéronef 100 et disposée par exemple au niveau de la peau de l'aéronef 100 et qui est donc ouverte entre l'extérieur de l'aéronef 100 et chaque sur-canalisation 104.

Du fait que le système d'aération 150 est disposé à l'avant de l'aéronef 100 et pour assurer un bon écoulement de l'air dans chaque sur-canalisation 104, la chambre d'extraction 120 est à l'arrière du système d'aération 150 et ici à l'arrière de l'aéronef 100 et la ou chaque sur-canalisation 104 débouche dans la chambre d'extraction 120 par l'avant de ladite chambre d'extraction 120.

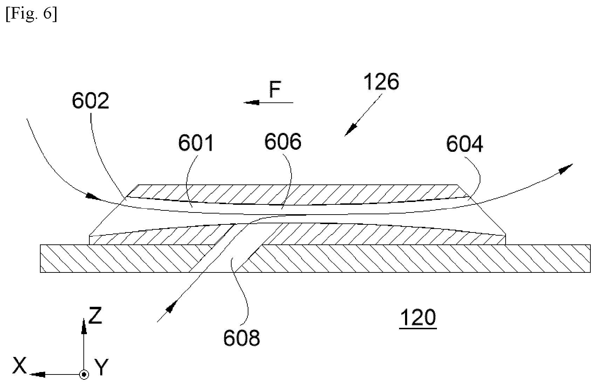

Dans le mode de réalisation de l'invention présenté aux Figs. 3 à 5, les moyens d'extraction comportent un système à effet venturi 126 dont un mode de réalisation est représenté à la Fig. 6.

Le système à effet venturi 126 comporte une gaine 601 avec une entrée 602 et une sortie 604 et fixé sur l'extérieur de l'aéronef 100 et dans le flux d'air extérieur avec l'entrée 602 orientée vers l'avant et la sortie orientée vers l'arrière.

La gaine 601 présente une section qui diminue entre l'entrée 602 et un point intermédiaire 606 entre l'entrée 602 et la sortie 604 et qui augmente entre le point intermédiaire 606 et la sortie 604.

Le système à effet venturi 126 comporte une canalisation de transfert 608 qui est fluidiquement connectée entre la chambre d'extraction 120 et la gaine 601 et plus particulièrement au niveau du point intermédiaire 606.

Ainsi, le flux d'air extérieur passant par la gaine 601 accélère entre l'entrée 602 et la sortie 604 et aspire les gaz présents dans la chambre d'extraction 120 par la canalisation de transfert 608.

Dans le mode de réalisation de l'invention présenté ici, le système à effet venturi 126 est installé sur un toit de la chambre d'extraction 120.

En complément, ou en remplacement, les moyens d'extraction comportent une canalisation d'évacuation 122 qui présente une première extrémité qui débouche à l'extérieur de l'aéronef 100 et une deuxième extrémité qui est fluidiquement connectée à la chambre d'extraction 120 et un ventilateur 124 monté dans la canalisation d'évacuation 122. Ainsi, même lorsque l'aéronef 100 est immobile, les gaz présents dans la chambre d'extraction 120 sont extraits par le ventilateur 124.

Selon un mode de réalisation préférentiel, la canalisation d'évacuation 122 débouche dans la chambre d'extraction 120 par l'arrière de ladite chambre d'extraction 120. Un tel arrangement permet par exemple de profiter de la présence du système d'aération 150 et donc du flux provenant du système d'aération 150, en particulier lorsque la ou chaque sur-canalisation 104 débouche dans la chambre d'extraction 120 par l'avant de ladite chambre d'extraction 120. Dans le mode de réalisation de l'invention présenté aux Figs. 3 et 4, la chambre d'extraction 120 comporte une paroi externe 128, ici son toit, et cette paroi externe 128 est une paroi extérieure de l'aéronef 100, c'est-à-dire en contact avec l'extérieur.

Pour des raisons d'accès à l'intérieur de la chambre d'extraction 120, la paroi externe 128 est percée d'une ouverture 130 et est équipée d'une trappe 132 mobile alternativement entre une position fermée dans laquelle l'ouverture 130 est fermée et une position ouverte dans laquelle l'ouverture 130 est ouverte. La trappe 132 est montée par exemple sur des charnières et est verrouillée en position fermée par un verrou.

Selon un mode de réalisation particulier, et pour éviter la mise en dépression de la chambre 110 du fait d'une trop forte aspiration, un canal d'entrée d'air 134 est disposé en partie basse de la chambre 110 et il communique entre l'extérieur de l'aéronef 100 et l'intérieur de la chambre 110, ici à travers la paroi latérale 110d formant la peau du fuselage 50.

## Revendications

1. Aéronef (100) comportant :
- au moins une canalisation de transport (102) dans laquelle s'écoule du dihydrogène,
- pour chaque canalisation de transport (102), une sur-canalisation (104) dans laquelle est fixée la canalisation de transport (102),
- un réservoir (106) contenant du dihydrogène,
- une chambre (110) comportant par des parois latérales (110a-d), un plancher (110e) et un plafond (110f) délimitant ensemble un volume (112) étanche et destinée à contenir des systèmes (114) pour le transport du dihydrogène, où ladite au moins une canalisation de transport (102) est fluidiquement connectée à un desdits systèmes (114), où la ladite au moins une canalisation de transport (102) rejoint la sur-canalisation (104) correspondante à travers une cheminée (116) du plafond (110f),
- une chambre d'extraction (120) dans laquelle débouchent la cheminée (116) et la ou chaque sur-canalisation (104), et
- des moyens d'extraction (122, 124, 126) arrangés pour extraire les gaz présents dans ladite chambre d'extraction (120) vers l'extérieur.

2. Aéronef (100) selon la revendication 1, **caractérisé en ce que** l'une des parois latérales (110a) présente un passage (121) dans lequel une extrémité du réservoir (106) est fixée de manière étanche.

3. Aéronef (100) selon l'une des revendications 1 ou 2, **caractérisé en ce que** la cheminée (116) débouche dans la chambre d'extraction (120) par le dessous de ladite chambre d'extraction (120).

4. Aéronef (100) selon l'une des revendications 1 à 3, **caractérisé en ce qu'**il comporte un système d'aération (150) arrangé pour assurer l'introduction d'air extérieur dans la ou chaque sur-canalisation (104) vers la chambre d'extraction (120).

5. Aéronef (100) selon la revendication 4, **caractérisé en ce que** la ou chaque sur-canalisation (104) débouche dans la chambre d'extraction (120) par l'avant de ladite chambre d'extraction (120).

6. Aéronef (100) selon l'une des revendications 4 ou 5, **caractérisé en ce que** les moyens d'extraction comportent un système à effet venturi (126).

7. Aéronef (100) selon l'une des revendications 4 à 6, **caractérisé en ce que** les moyens d'extraction comportent une canalisation d'évacuation (122) qui débouche à l'extérieur de l'aéronef (100) et qui est fluidiquement connectée à la chambre d'extraction (120) et un ventilateur (124) monté dans la canalisation d'évacuation (122).

8. Aéronef (100) selon la revendication 7, **caractérisé en ce que** la canalisation d'évacuation (122) débouche dans la chambre d'extraction (120) par l'arrière de ladite chambre d'extraction (120).

9. Aéronef (100) selon l'une des revendications 1 à 8, **caractérisé en ce que** la chambre d'extraction (120) comporte une paroi externe (128) constituant une paroi extérieure de l'aéronef (100), **en ce que** ladite paroi externe (128) est percée d'une ouverture (130), et **en ce que** ladite paroi externe (128) est équipée d'une trappe (132) mobile alternativement entre une position fermée dans laquelle l'ouverture (130) est fermée et une position ouverte dans laquelle l'ouverture (130) est ouverte.

10. Aéronef (100) selon l'une des revendications 1 à 9, **caractérisé en ce qu'**il comporte un canal d'entrée d'air (134) disposé en partie basse de la chambre (110) et communicant entre l'extérieur de l'aéronef (100) et l'intérieur de la chambre (110).

## Patentansprüche

1. Flugzeug (100), das Folgendes umfasst:
- mindestens eine Transportleitung (102), in der Diwasserstoff fließt,
- für jede Transportleitung (102), eine umgebende Leitung (104), in der die Transportleitung (102) befestigt ist,
- einen Tank (106), der Diwasserstoff enthält,
- eine Kammer (110), die Seitenwände (110a-d), einen Boden (110e) und eine Decke (110f) umfasst, die zusammen ein dichtes Volumen (112) begrenzen, und die dazu bestimmt ist, Systeme (114) für den Transport des Diwasserstoffs zu enthalten, wobei die mindestens eine Transportleitung (102) fluidisch mit einem der Systeme (114) verbunden ist, wobei die mindestens eine Transportleitung (102) die entsprechende umgebende Leitung (104) durch einen Abzug (116) der Decke (110f) erreicht,
- eine Extraktionskammer (120), in die der Abzug (116) und die oder jede umgebende Leitung (104) münden, und
- Extraktionsmittel (122, 124, 126), die dazu angeordnet sind, die in der Extraktionskammer (120) vorhandenen Gase nach außen zu extrahieren.

2. Flugzeug (100) nach Anspruch 1, **dadurch gekennzeichnet, dass** eine der Seitenwände (110a) einen Durchgang (121) aufweist, in dem ein Ende des Tanks (106) auf dichte Weise befestigt ist.

3. Flugzeug (100) nach einem der Ansprüche 1 oder 2, **dadurch gekennzeichnet, dass** der Abzug (116) von der Unterseite der Extraktionskammer (120) in die Extraktionskammer (120) mündet.

4. Flugzeug (100) nach einem der Ansprüche 1 bis 3, **dadurch gekennzeichnet, dass** es ein Belüftungssystem (150) umfasst, das dazu angeordnet ist, die Zufuhr von Außenluft in die oder jede umgebende Leitung (104) hin zu der Extraktionskammer (120) sicherzustellen.

5. Flugzeug (100) nach Anspruch 4, **dadurch gekennzeichnet, dass** die oder jede umgebende Leitung (104) von der Vorderseite der Extraktionskammer (120) in die Extraktionskammer (120) mündet.

6. Flugzeug (100) nach einem der Ansprüche 4 oder 5, **dadurch gekennzeichnet, dass** die Extraktionsmittel ein Venturi-Effekt-System (126) umfassen.

7. Flugzeug (100) nach einem der Ansprüche 4 bis 6, **dadurch gekennzeichnet, dass** die Extraktionsmittel eine Evakuierungsleitung (122), die auf der Außenseite des Flugzeugs (100) mündet und die fluidisch mit der Extraktionskammer (120) verbunden ist, und einen Lüfter (124), der in der Evakuierungsleitung (122) angebracht ist, umfassen.

8. Flugzeug (100) nach Anspruch 7, **dadurch gekennzeichnet, dass** die Evakuierungsleitung (122) von der Rückseite der Extraktionskammer (120) in die Extraktionskammer (120) mündet.

9. Flugzeug (100) nach einem der Ansprüche 1 bis 8, **dadurch gekennzeichnet, dass** die Extraktionskammer (120) eine äußere Wand (128) umfasst, die eine Außenwand des Flugzeugs (100) bildet, dass die äußere Wand (128) von einer Öffnung (130) durchquert wird und dass die äußere Wand (128) mit einer Klappe (132) ausgerüstet ist, die wahlweise zwischen einer geschlossenen Position, in der die Öffnung (130) geschlossen ist, und einer geöffneten Position, in der die Öffnung (130) geöffnet ist, beweglich ist.

10. Flugzeug (100) nach einem der Ansprüche 1 bis 9, **dadurch gekennzeichnet, dass** es einen Lufteinlasskanal (134) umfasst, der im unteren Teil der Kammer (110) angeordnet ist und zwischen der Außenseite des Flugzeugs (100) und dem Inneren der Kammer (110) kommuniziert.

## Claims

1. Aircraft (100) having:
- at least one transport pipe (102) in which dihydrogen flows,
- for each transport pipe (102) a pipe shroud (104) inside which the transport pipe (102) is fixed,
- a tank (106) containing dihydrogen,
- a chamber (110) comprising lateral walls (110a-d), a floor (110e) and a roof (110f) together delimiting a fluidtight volume (112) intended to contain systems (114) for transporting the dihydrogen, in which said at least one transport pipe (102) is fluidically connected to one of said systems (114), in which said at least one transport pipe (102) joins the corresponding pipe shroud (104) through a chimney (116) in the roof (110f),
- an extraction chamber (120) into which the chimney (116) and the or each pipe shroud (104) open, and
- extraction means (122, 124, 126) which are arranged to extract to the outside the gases present in said extraction chamber (120).

2. Aircraft (100) according to Claim 1, **characterized in that** one of the lateral walls (110a) has a passage (121) into which one end of the tank (106) is fixed in a fluidtight manner.

3. Aircraft (100) according to one of Claims 1 or 2, **characterized in that** the chimney (116) opens into the extraction chamber (120) from the underside of said extraction chamber (120).

4. Aircraft (100) according to one of Claims 1 to 3, **characterized in that** it comprises a ventilation system (150) arranged to ensure that outside air is introduced into the or each pipe shroud (104) towards the extraction chamber (120).

5. Aircraft (100) according to Claim 4, **characterized in that** the or each pipe shroud (104) opens into the extraction chamber (120) from the front of said extraction chamber (120).

6. Aircraft (100) according to one of Claims 4 or 5, **characterized in that** the extraction means comprise a venturi-effect system (126).

7. Aircraft (100) according to one of Claims 4 to 6, **characterized in that** the extraction means comprise a discharge pipe (122) which opens to outside the aircraft (100) and which is fluidically connected to the extraction chamber (120) and a fan (124) mounted in the discharge pipe (122).

8. Aircraft (100) according to Claim 7, **characterized in that** the discharge pipe (122) opens into the extraction chamber (120) from the rear of said extraction chamber (120).

9. Aircraft (100) according to one of Claims 1 to 8, **characterized in that** the extraction chamber (120) comprises an outer wall (128) constituting an exterior wall of the aircraft (100), **in that** said outer wall (128) is pierced with an opening (130), and **in that** said outer wall (128) is fitted with a hatch (132) that can be moved alternately between a closed position in which the opening (130) is closed and an open position in which the opening (130) is open.

10. Aircraft (100) according to one of Claims 1 to 9, **characterized in that** it comprises an air inlet duct (134) positioned at the lower part of the chamber (110) and providing communication between the outside of the aircraft (100) and the inside of the chamber (110).
